# EUROPEAN PATENT APPLICATION

(11) **EP 4 653 347 A1**
(43) Date of publication of application: **26.11.2025**
(21) Application number: 24177835.6
(22) Date of filing: 24.05.2024
(51) Int. Cl.: B65G 15/08

(54) **A TRANSPORT SYSTEM FOR TRANSPORTING BULK GOODS**

(71) Applicant: Deprez Construct NV, 8610 Kortemark (BE)
(72) Inventor: Deprez, Johan, 8680 Koekelare (BE)
(74) Representative: IP HILLS NV

(57) **Abstract**

A transport system for transporting bulk goods is provided, the system comprises at least one truss having an upper chord and a lower chord, said upper chord comprises a tubular channel provided by one or more tubular elements, said tubular channel extending from one side of the transport system to the other side of the transport system, said tubular channel having an inner surface, said transport system comprises at least one conveyor belt provided within said tubular channel and in sliding engagement with the inner surface of said tubular channel.

## Description

### Field of the Invention

The present invention generally relates to transport system for transporting bulk goods.

### Background of the Invention

Nowadays, bulk goods, in various industries, need to be transported over longer distances. From time to time, this is not feasible to transport these goods by truck, as the distances are too small, while transporting these goods by presently known conveyor belts require lots of construction work, rendering such static transport systems not feasible or uneconomic. And if provided, the provision of consecutive transport belts, handing over the goods at intermediate loading and unloading points , is difficult.

For increasing the length of the transport belts, transport belts are carried by a large number of transport rollers or idlers. For bulk goods, in order to prevent the goods from leaving the upper surface of the belt, e.g. due to vibrations and alike, the belts need to be held in a V-shape by troughing idlers.

However such systems are maintenance intensive, as a lot or moving parts are present. This leads to significant downtime of the transport system and a huge maintenance cost. In order to allow easy access, such transport systems are ideally open.

### Summary of the Invention

Hence there is a need for significantly long transport systems able to bridge significant distances, while in the meantime the number of parts in the transportation system can be minimized so downtime and maintenance and maintenance cost can be reduced.

According to a first aspect of the invention, a transport system for transporting bulk goods is provided, said system comprises at least one truss having an upper chord and a lower chord, said upper chord comprises a tubular channel provided by one or more tubular elements, said tubular channel extending from one side of the transport system to the other side of the transport system, said tubular channel having an inner surface, said transport system comprises at least one conveyor belt provided within said tubular channel and in sliding engagement with the inner surface of said tubular channel.

In the context of this invention, a truss is to be understood as an assemblage of members - such as beams - forming a rigid framework.

The transport system according to the invention has the advantage that seen the truss-construction, very long distances may be bridges. Because the conveyor belt is in sliding engagement with the inner surface of the tubular channel, substantially no mechanical, electrical or other additional means are to be provided along the tubular channel in order to provide a working and reliable transport system.

The truss according to the invention has an upper and a lower chord, which are mutually connected by a plurality of vertical braces and/or sloped braces and/or diagonal braces.

The upper chord comprises a tubular channel provided by one or more, possibly some or all axially aligned, tubular elements. Hence the upper chord may comprise one single tubular element extending from one side of the transport system to the other side of the transport system. Alternatively the tubular channel comprises a plurality, e.g. 2, 3, 4, 5, 6 or even more, of, possibly axially aligned, tubular elements which are linked movelessly one to the other thereby providing a chord. As an example, the tubular elements may be bolted one to the other using e.g. external flanges.

According to some embodiments, the one or more tubular elements may have a circular or elliptic radial cross section.

More preferably the one or more tubular elements have a circular radial cross section. When the one or more tubular elements have an elliptic radial cross section, the major axis of the elliptic radial cross section is either substantially horizontally or substantially vertically oriented.

According to some embodiments, the maximum distance between two points on the radial cross section of the one or more axially aligned tubular elements may be in the range of 0.3m to 1.5m, preferably between 0.4m and 1m.

This maximum distance between two points on the radial cross section is hence the diameter of the circular radial cross section or the length of the major axis in case of an elliptic radial cross section.

The minimum measurable distance between the outer surface of the upper chord and the outer surface of the lower chord may be in the range of 0.5m to 2m, preferably being in the range of 0.6 to 1.5m.

Possibly this distance is substantially constant and uniform along the upper chord.

Any type of truss may be used according to the present invention.

According to some embodiments, the truss may be one of a flat truss, a sloping flat truss, a mono- or dual pitch truss and a hip truss.

According to some embodiments, the truss may be a dual pitch truss, the dual pitch truss being one of a howe truss, a Pratt truss, a fink truss, a double fink truss, a stub truss, a fan truss, a fan truss, a double kingpost truss, a queenpost truss, a modified queenpost truss, a scissors truss, an attic truss, a cathedral truss, a waddle A truss, a cambered truss and a piggyback truss.

According to some embodiments, the truss is an inverted dual pitch truss.

According to some embodiments, the truss may be a flat or sloping flat truss, the flat or loping flat truss being one of a Pratt truss, a howe truss, a fink truss, a warren truss, a Baltimore truss a double intersecting warren truss and a lattice truss

According to some embodiments, the truss may be a bridge truss.

The length of the upper chord preferably may be in the range of 5m to 750m, such as in the range of 10m to 600m, e.g. in the range of 15 to 500m. The truss may be supported along its length by a plurality of supporting points and two end support points. The distance between two adjacent support points is preferably equal to or less than 50m, more preferably equal to or less than 30m, even equal to or less than 25m. hence this defines the maximum span between two support points.

The support points may be provided as fixed support points or as bearing support points. Preferably bearing support points are used to allow the truss to extend or shrink under ambient circumstances. It is clear that next to bearing support points, some points may be provided as fixed points, e.g. pin support points.

According to some embodiments, a low friction layer or coating may be provided on the side of the conveyor belt contacting the tubular channel.

According to some embodiments, a low friction layer coating may be provided on at least the part of the inner surface of the tubular channel contacting the belt.

The low friction coating or layer may be a low friction polymeric coating, e.g. a polytetrafluorethylene (PTFE) or polyurethane (PUR) or polyurea (PU) coating. The coating may be applied with a thickness of e.g. at least 5 mm thickness and lay be less than er equal to 20mm thick.

The provision of such layer or coating has the advantage that the force needed to move the conveyor belt, or to initiate the movement of the conveyor belt after downtime, may be kept low.

Such layers may be provided to the inner side of the tubular channel or the conveyor belt by lacquering, spraying, optionally using a robotic device traveling through the tubular channel while spraying the polymeric coating, adhering a layer to the surface or any other method. Possibly a tubular low friction tubular liner, hence itself being a tube, may be inserted in the tubular channel.

According to some embodiments, the lower chord may comprise a further tubular channel provided by one or more tubular elements, said further tubular channel having an inner surface, said tubular channel extending from one side of the transport system to the other side of the transport system, said one conveyor belt being provided within said further tubular channel and in sliding engagement with the inner surface of said further tubular channel.

The lower chord may comprise a further tubular channel provided by one or more, possibly some or all axially aligned, tubular elements. Hence the lower chord may comprise one single tubular element extending from one side of the transport system to the other side of the transport system. Alternatively further the tubular channel comprises a plurality, e.g. 2, 3, 4, 5, 6 or even more, of, possibly axially aligned, tubular elements which are linked movelessly one to the other thereby providing a chord. As an example, the tubular elements may be bolted one to the other using e.g. external flanges.

Also for the lower chord, the one or more tubular elements have a circular or elliptic radial cross section. More preferably the one or more tubular elements have a circular radial cross section. When the one or more tubular elements have an elliptic radial cross section, the major axis of the elliptic radial cross section is either substantially horizontally or substantially vertically oriented. The one or more tubular elements present in the lower chord may be similar or identical to the one or more tubular elements present in the upper chord.

Most preferably the upper and lower chord are substantially parallel.

According to some embodiments, the truss may be a parallel truss.

According to some embodiments, the upper and lower chord may be steel chords.

Even more preferred, the truss is a steel truss.

Alternatively though, also other materials may be used to provide the chords and the other elements of the truss. Polymeric material or reinforced polymeric material, like composite material, may be used. Also tother metals may be used.

According to some embodiments, the conveyor belt is endless belt or a closed belt.

Preferably a polymeric or rubber belt is used, such as a steel reinforced polymeric or rubber belt.

According to some embodiments, the conveyor belt may be a sliding belt.

A slider belt or sliding belt can be used with or even without the low friction coating provided on at least the part of the inner surface of the tubular channel contacting the belt. The sliding belt may have a polymeric, like polyester textile surface for contacting the inner surface of the tubular channel.

The belt is positioned in the upper chord in such a way that goods being conducted in the tubular element or elements of the upper chord, tend not to touch the inner wall of the tubular element or elements. To achieve this, the width of the belt is preferably chosen such that the two lines between each of the edges of the belt and the centre of the chord, define an angle (i.e. the angel being oriented towards the belt) in the range of 150° to 200°, preferably in the range of 160° to 180°. This is in particularly the case when the upper chord has a circular radial cross section. The belt preferably has a width in the range of 1.35 to 1.55 times the diameter of the inner chord diameter, e.g. 1.4 to 1.52 times the diameter of the inner chord diameter.

Possibly the upper and/or lower chord may be provided with a ventilation system, to vent the inner of the tubular element or elements. This may be a natural or forced ventilation. As an example, the tubular element or elements may be provided with ventilation caps, allowing gaseous fluids to pass from the inner of the tubular element or elements to the ambient.

The transport system further may comprise additional means to drive the belt, to tension the belt, to control the movement direction and speed of the belt, and alike. The transport system further may also comprise inspection and detection means, like temperature measurement systems, fire detection means, tension monitoring means, load or overload protection means, and many more.

The transport system according to the invention may further comprise a tensioning system. The tensioning system, also referred to as tensioning means, may comprise one or more tensioning drums, providing a force to the transport belt and causing the belt to get and stay tensioned. Such tensioning system may comprise one or more driving drums The transport system according to the invention may further comprise a driving system, also referred to as driving means, to drive the the transport belt through the tubular elements of the chords. Such driving system may comprise one or more driving drums. At both sides of the transport system, the transport system may comprise a returning means or returning system, to return the transport belt in moving direction. The returning means may comprise a return drum and optionally one or more trough roller idlers to modify the shape of the transport belt from flat shape to through shape. According to some embodiments, one of the returning drums may function as a driving drum. Preferably this is the returning drum at the side of the transport system where the transport belt is unloaded. According to some embodiments, one of the returning drums may function as a tensioning drum. Preferably this is the returning drum at the side of the transport system where the transport belt is loaded.

The transport system according to the invention has the advantage that a significant distance can be bridged, while in the meantime a transportation means is provided. As such the number of parts in the transportation system can be minimized. The transport system further shelters the goods being transported over this significant distance from environmental factors and elements, e.g. direct or too much sunlight, rain, hail, heat or cold, animals, and many more.

As the goods are sheltered and enclosed, the risk on dust and/or odour nuisance from possible dusty and/or foul smelling product to the outside environment is reduced or even avoided. Further, less or no downtime of the transport system will occur due to wind or rain.

As no supporting rolls are necessary, less moving elements are present in the transport system, which reduces the need for interventions and maintenance, either preventive or curative, due to possible malfunctioning or wear of these elements. This cause the uptime of the transport system to be increased, hence the transport system working more efficient over a longer period of time. It may also mean that less entrance and access facilities need to be provided, like a walking platform and alike, which may reduce the cost of the transport system and the simplifies the construction.

According to a second aspect of the invention, the transport system according to the first aspect of the invention may be used to transport bulk material, preferably over a longer distance. The bulk material may be any bulk goods, such as coal, charcoal , scrap particles, sand, mud, sludge, glass particles, polymer grains, like seeds, grains, clay, coal, fertilizers, plastic granules and alike Hence, the bulk material may be any dry raw material or granules in bulk.

The bulk material may as well be food like potatoes, carrots, onions, . beets, turnips, tulip bulbs, bulbs, tubers, cabbages, crops, apples, pears, cherries, or any other fruit or vegetables, either freshly harvested or cleaned, meat, fish, and many more.

Hence, a transport system according to the first aspect of the invention may be used for transporting freshly harvested or cleaned vegetables or fruit, preferably potatoes.

It is clear that features of one aspect of the invention may be combined with any or all features of another aspect of the invention. When reference is made to ranges in the context of this invention, the ranges are to be understood inclusive, unless explicitly mentioned differently.

### Brief Description of the Drawings

Fig. 1 illustrates schematically a transport system for transporting bulk goods.
Fig. 2 illustrates schematically a cross section of the upper chord of the truss of the transport system for transporting bulk goods of figure 1.
Fig. 3 illustrates schematically a cross section of the lower chord of the truss of the transport system for transporting bulk goods of figure 1.
Fig. 4 illustrates schematically the first end of the transporting bulk goods of figure 1.

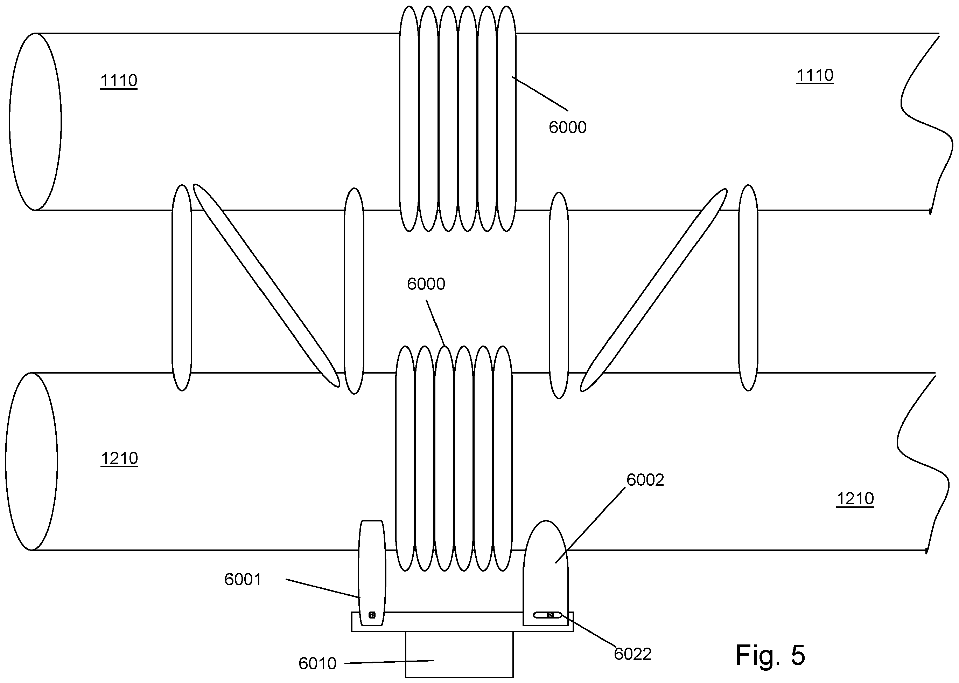

Fig. 5 illustrates schematically a support point of the lower chord, where two adjacent tubular elements are connected. figure 1.

The same reference signs refer to the same or a similar feature in the different figures.

### Detailed Description of Embodiment(s)

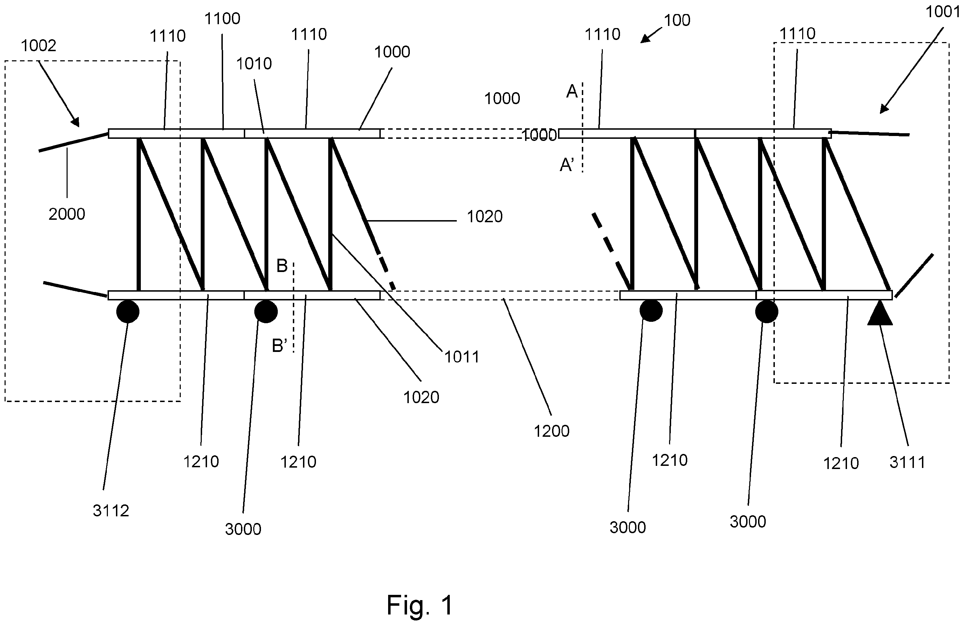

A transport system 100 for transporting bulk goods is shown in figure 1. The transport system comprises a truss 1000 having an upper chord 1010 and a lower chord 1020 which are mutually connected by a plurality of vertical 1011 and sloped 1012 beams.

The upper chord 1010 comprises a tubular channel 1100 provided by a plurality of steel tubular elements 1110. These tubular elements 1110 may be bolted or connected one to the other forming one long tubular channel 1100 of e.g. about 500m long.

In a similar way, the lower chord 1020 comprises a tubular channel 1200 provided by a plurality of steel tubular elements 1210. These tubular elements 1210 may be bolted or connected one to the other forming one long tubular channel 1200 of e.g. about 500m long.

These tubular channels 1100 and 1200 extend from one side 1001 of the transport system to the other side 1002 of the transport system 100.

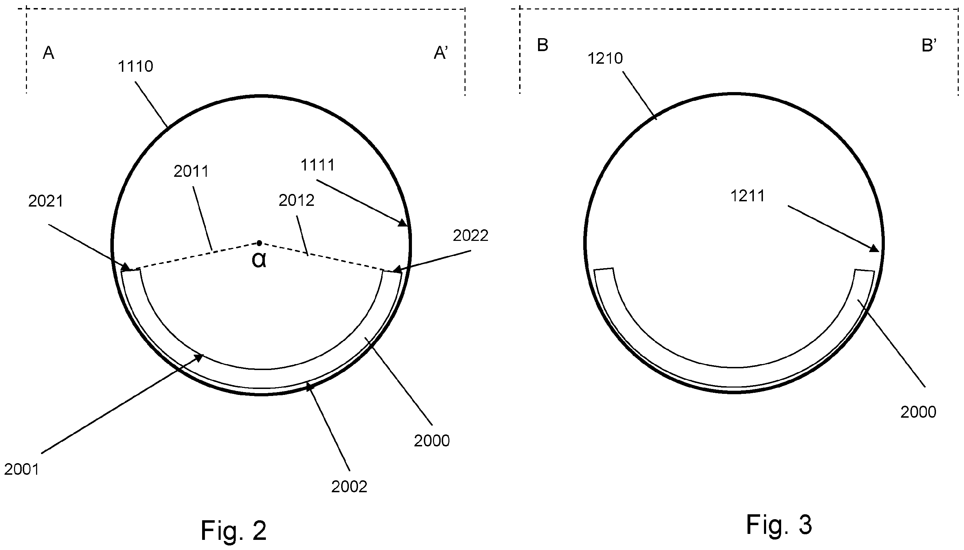

The tubular elements 1100 and 1120 of both the upper and lower chord have a circular radial cross section. The circular radial cross section of the upper chord 1010 is shown in figure 2.

The tubular channel 1100, more precise the tubular elements 1110 of the tubular channel 1100 have an inner surface 1111. The inner surface may be coated with a coating from polymeric low friction layer, e.g. by spraying such polymeric layer to the inner surface 1111 . A conveyor belt 2000, being a sliding belt is provided within the tubular channel 1110 and is in sliding engagement with the inner surface 1111 of the tubular channel 1100. The upper side 2001 of the conveyor belt 2000 is to carry the bulk good, the lower side 2002 of the conveyor belt 2000 is in sliding engagement with the inner surface 1111 of the tubular channel 1100. The two lines 2011 and 2012 between each of the edges 2021 and 2022 of the belt 2000 and the centre 1112 of the upper chord 1010, define an angle α of about 170°.

The inner diameter of the tubular channel 1100 is about 1m. The width of the belt 2000 is about 1.5m.

Along its length the upper tubular channel 1100 is provided with venting caps 1150.

The lower chord 1020 is provided from similar tubular elements 1210. As shown in figure 3, the belt 2000 returns in sliding engagement with the inner surface 1211 of the tubular channel 1200. Also this inner surface 1211 may be coated with a coating from polymeric low friction layer, e.g. by spraying such polymeric layer to the inner surface 1211.

The lower chord 1020 is supported by a plurality of intermediate supporting points 3000, and a first 3111 and a second 3112 end supporting point. The first end supporting point is a fixed supporting point, whereas all intermediate and the second end supporting point are bearing points. The distance between adjacent supporting point is about 25m.

At both sides 1001 and 1002, a reversing means 3000 to reverse the direction of the transport belt 2000 is provided. In essence, this reversing means 3000 comprises a reversing drum 3001 which contacts the inner or lower side 2002 of the transport belt 2000. At the second side 2002, where the bulk good is discharged from the transporting belt 2000, this reversing drum may be a driven drum, pulling the transporting belt 2000 through the tubular channels 1100 and 1200. This reversing drum may be a flat, cylindrical drum, or a profiled drum like a V- or U-profiled drum, the transport belt contacting the profile. Flat, cylindrical drum are preferred.

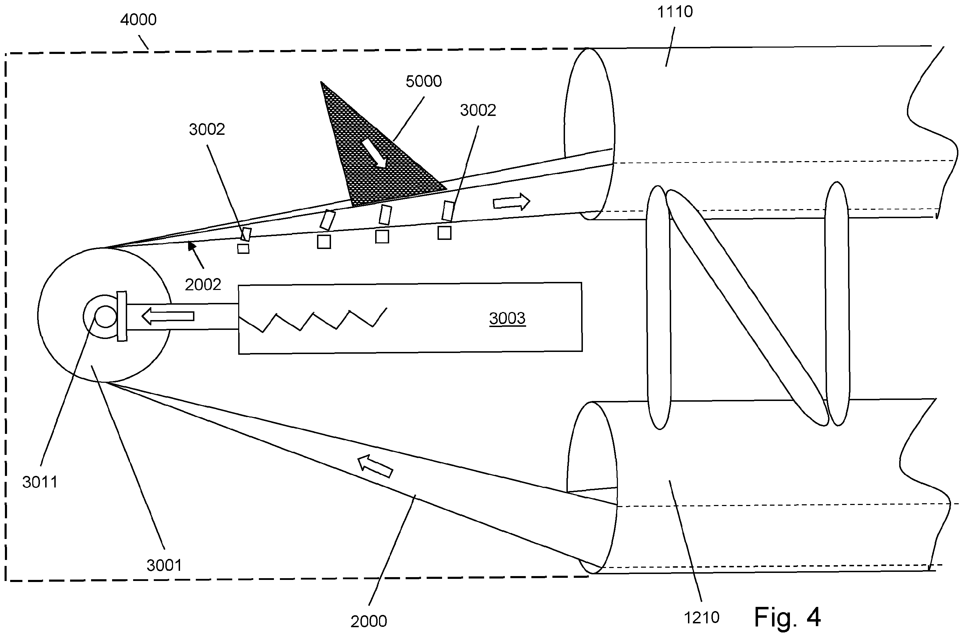

According to the embodiment, as shown in figure 4, at the first side 1001, the reversing drum 3001 may be a flat, cylindrical drum. in the moving direction after the reversing drum, a loading system is provided, to provide bulk goods 5000 on the transport belt 2000. This system comprises e.g. a number of trough roller idlers 3002 with gradually changing inclination of the side rollers, curling up the sides of the transport belt 2000 from a flat shape to a curved shape. Once curled enough, the bulk load may be dumped on the trough shaped curve before entering the upper tubular channel 1100.

At the second side 2002, an unloading system may be provided. As a mere example, the trough-shaped transport belt leaving the upper tubular channel 1100 is brought back to a flat state, optionally by a number of trough roller idlers with gradually changing inclination, after which the bulk good falls from the transport belt upon returning the belt over the returning drum, which drum might be driven by e.g. a motor. The goods are further taken out of the transport system by any convenient means. After having passed the unloading system, the returning system returns the belt back to the first side of the transport system through the lower chord 1020.

In order to ensure that the transport belt is kept tensioned sufficiently, one or both returning drums may be mount on a loaded system, driving the drum in a direction causing the belt to be tensioned. Alternatively a separate tensioning drum or more than one tensioning drums may be used for tensioning the belt.

In a preferred embodiment, the returning drum 3001 at the first side of the transport system, where the transport belt is loaded, functions as the tensioning drum tensioning the transport belt 2000, while the returning drum at the second side of the transport system, where the transport belt is unloaded, functions as the driving drum driving the transport belt. The returning drum 3001 at the first side of the transport system is pressed outwards of the transportation belt 2000 by means of a spring 3003 acting substantially perpendicularly on the axis 3011 of the returning drum 3001.

The loading and unloading zone, including the loading station, the unloading station and the returning drums, may be encapsulated by an appropriate covering system 4000, keeping the bulk goods clean according to the ruling regulations.

Between adjacent tubular elements 1110 respectively 1210 of the tubular channel 1100 respectively 1200, elastic bellows 6000 may be provided to allow the tubular elements to move one relatively to the other due to e.g. thermal extension or contraction. Such coupling may be used as location to support the upper or lower chord by a vertical pole 6010. At one side of the coupling, the one tubular element is couped to the support by a hinged coupling 6001 with a substantially circular hole and fastening device, e.g. a bolt, while at the other side of the coupling, the other tubular element is couped to the support by a hinged coupling 6002 with a substantially rectangular slit 6022and fastening device. Such coupling allows the tubular elements to bend under its load, while the tubular elements may as well extend or contract. Preferably the coupling of the one tubular element is provided at one side of an elastic bellow, the coupling of the second, adjacent tubular element is provided at the other side of an elastic bellow.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A transport system for transporting bulk goods, said system comprises at least one truss having an upper chord and a lower chord, said upper chord comprises a tubular channel provided by one or more tubular elements, said tubular channel extending from one side of the transport system to the other side of the transport system, said tubular channel having an inner surface, said transport system comprises at least one conveyor belt provided within said tubular channel and in sliding engagement with the inner surface of said tubular channel.

2. A transport system according to claim 1, wherein the one or more tubular elements have a circular or elliptic radial cross section.

3. A transport system according to any one of the preceding claims, wherein the maximum distance between two points on the radial cross section of the one or more axially aligned tubular elements is in the range of 0.3m to 1.5m, preferably between 0.4m and 1m.

4. A transport system according to any one of the preceding claims, wherein the truss is one of a flat truss, a sloping flat truss, a mono- or dual pitch truss and a hip truss.

5. A transport system according to any one of the preceding claims, wherein the truss is a dual pitch truss, the dual pitch truss being one of a howe truss, a Pratt truss, a fink truss, a double fink truss, a stub truss, a fan truss, a fan truss, a double kingpost truss, a queenpost truss, a modified queenpost truss, a scissors truss, an attic truss, a cathedral truss, a waddle A truss, a cambered truss and a piggyback truss.

6. A transport system according to any one of the preceding claims, wherein the truss is an inverted dual pitch truss.

7. A transport system according to any one of the claims 1 to 4, wherein the truss is a flat or sloping flat truss, the flat or loping flat truss being one of a Pratt truss, a howe truss, a fink truss, a warren truss, a Baltimore truss a double intersecting warren truss and a lattice truss

8. A transport system according to any one of the preceding claims, wherein the truss is a bridge truss.

9. A transport system according to any one of the preceding claims, wherein a low friction coating is provided on side of belt contacting the tubular channel.

10. A transport system according to any one of the preceding claims, wherein a low friction coating is provided on at least the part of the inner surface of the tubular channel contacting the belt.

11. A transport system according to any one of the preceding claims, wherein said lower chord comprises a further tubular channel provided by one or more tubular elements, said further tubular channel having an inner surface, said tubular channel extending from one side of the transport system to the other side of the transport system, said one conveyor belt being provided within said further tubular channel and in sliding engagement with the inner surface of said further tubular channel.

12. A transport system according to any one of the preceding claims, wherein the truss is a parallel truss.

13. A transport system according to any one of the preceding claims, wherein the upper and lower chord are steel chords.

14. A transport system according to any one of the preceding claims, wherein the conveyor belt is a sliding belt.

15. the use of a transport system according to any one of the preceding claims, for transporting freshly harvested or cleaned vegetables or fruit, preferably potatoes.
